# EUROPEAN PATENT SPECIFICATION

(11) **EP 2 712 196 B1**
(45) Date of publication and mention of the grant of the patent: **12.09.2018**
(21) Application number: 12784913.1
(22) Date of filing: 16.05.2012
(51) Int. Cl.: H04N 13/00, G02B 27/00, G03B 35/14

(54) **PARALLAX IMAGE DISPLAY DEVICE, PARALLAX IMAGE GENERATION METHOD, PARALLAX IMAGE PRINT**
PARALLAXEN-BILDANZEIGEVORRICHTUNG, PARALLAXEN-BILDERZEUGUNGSVERFAHREN UND PARALLAXEN-BILDAUSDRUCK
DISPOSITIF D'AFFICHAGE D'IMAGES AVEC PARALLAXE, PROCÉDÉ DE GÉNÉRATION D'IMAGES AVEC PARALLAXE ET IMPRESSION D'IMAGES AVEC PARALLAXE

(30) Priority: 16.05.2011 JP 2011109234
(43) Date of publication of application: 26.03.2014
(73) Proprietor: FUJIFILM Corporation, Tokyo 106-0031 (JP)
(72) Inventor: ONO Shuji, Ashigara-kami-gun Kanagawa 258-8538 (JP)
(74) Representative: Klunker IP Patentanwälte PartG mbB
(86) International application number: PCT/JP2012/062501
(87) International publication number: WO 2012/157669

(56) References cited:
- JP-A- 10 186 277
- JP-A- 2005 215 326
- JP-A- 2009 157 118
- JP-A- 2009 193 014
- US-A1- 2007 097 024

## Description

### TECHNICAL FIELD

The present invention relates to a parallax image display device according to the preamble of claim 1, a parallax image generation method, and a parallax image print for performing a stereoscopic view using a left-eye image and a right-eye image.

### BACKGROUND ART

A parallax image display device or a parallax image generation method has been known hitherto in which a stereoscopic view is carried out by spatially dividing a display screen using a predetermined array such as a staggered pattern array or a stripe pattern array and displaying a parallax image based on a left-eye image and a right -eye image.

Patent Literature 1 discloses a device that spatially divides a display screen using a staggered pattern array or a stripe pattern array to display left and right parallax images. Patent Literature 2 discloses a device that spatially divides a display screen using a stripe pattern array to display left and right parallax images. Patent literature 3 discloses a parallax image display device according to the preamble of claim 1. This patent document discloses a device in which a stripe pattern or a matrix pattern is used to display left and right parallax images.

### CITATION LIST

### PATENT LITERATURE

Patent Literature 1: JP 07-307959 A
Patent Literature 2: JP 2005-215326 A
Patent Literature 3: US 2007/00097024 A1

### SUMMARY OF INVENTION

### TECHNICAL PROBLEMS

In the case where a display screen is spatially divided using a predetermined array as described in Patent Literature 1 or 3, when similar signal components are included in image signals, interference among spatial signals occurs so that an interference signal (moire) occurs in an observed image, thereby markedly damaging image quality.

As described in Patent Literature 2, particularly, in a stripe pattern array, signal components similar to a stripe pattern (stripe pitch) are often included in an image signal and moire often occurs in an observed image.

An object of the present invention is to provide a parallax image display device, a parallax image generating method, and a parallax image print, which can generate and display a parallax image with high quality without causing interference (moire) between a pattern of a display area and an image signal in the parallax image display device in which a display screen is spatially divided using a predetermined array to perform a stereoscopic view.

### SOLUTION TO PROBLEMS

In order to solve the foregoing problems, the present invention provides a parallax image display device comprising: the features of claim 1.

Preferably, the parallax image generating unit includes a parallax image display area dividing section, having a stripe dividing function which divides the parallax image display area into stripes having a same width, or having different widths.

Preferably, the parallax image generating unit further includes a unit region shifting section, and the unit region shifting section selects an arbitrary stripe in the parallax image display area having been subjected to the rearranging and randomly shifts the parallax image display area in the stripe width direction on the basis of the left-eye unit region and the right-eye unit region constituting the selected stripe.

Preferably, the stripe dividing function divides the parallax image display area into stripes having different widths instead of dividing the parallax image display area into stripes having the same width.

Preferably, the stripe direction is a horizontal direction of a display screen, a vertical direction of the display screen, or an oblique direction of the display screen.

The parallax image display device further comprises a polarizing filter that is disposed in front of the parallax image display unit and that can be operated on the basis of the parallax image so that a polarization state of the left-eye region and a polarization state of the right-eye region are different from each other.

The present invention provides a parallax image generating method having the features of claim 8.

Preferably, the parallax image generating method further comprises a step of: selecting an arbitrary stripe in the parallax image display area having been subjected to the rearranging and randomly shifting the parallax image display area in the stripe width direction on the basis of the left-eye unit region and the right-eye unit region constituting the selected stripe.

Preferably, the parallax image generating method further comprises a step of: dividing the parallax image display area into stripes having different widths instead of dividing into stripes having the same width.

The present invention provides a parallax image print, wherein the parallax image generated by the foregoing parallax image generating method is printed.

Preferably, a polarizing film having a polarization state for the right-eye region and a polarization state for the left-eye region which are different from each other is pasted.

### ADVANTAGEOUS EFFECTS OF INVENTION

According to the present invention, it is possible to generate a parallax image with high quality while preventing interference from occurring between a pattern of a display area and an image signal as well as keeping a left-eye image and a right-eye image substantially equal to each other in the amount
of information.

### BRIEF DESCRIPTION OF DRAWINGS

FIG. 1 is an appearance diagram illustrating an example of a parallax image display device according to the present invention.
FIG. 2 is a block diagram illustrating a detailed configuration of an example of the parallax image display device according to the present invention.
FIGS. 3(A) and 3(B) are explanatory diagrams each illustrating a first example of a parallax image generating method in the parallax image display device according to the present invention.
FIGS. 4(A) and 4(B) are explanatory diagrams each illustrating a second example of the parallax image generating method in the parallax image display device according to the present invention.
FIGS. 5(A) to 5(D) are explanatory diagrams each illustrating a third example of the parallax image generating method in the parallax image display device according to the present invention.
FIG. 6 is a flowchart illustrating a process flow of generating a parallax image according to the first example of the present invention.
FIG. 7 is a flowchart illustrating a process flow of generating a parallax image according to the second example of the present invention.
FIG. 8 is a flowchart illustrating a process flow of generating a parallax image according to the third example of the present invention.
FIGS. 9(A) to 9(C) are diagrams each illustrating an example of a parallax image with a stripe pattern in the prior art.

### DESCRIPTION OF EMBODIMENTS

A parallax image display device, a parallax image generation method, and a parallax image print according to the present invention will be described below in detail based on preferred examples shown in the accompanying drawings.

### <Parallax image display device>

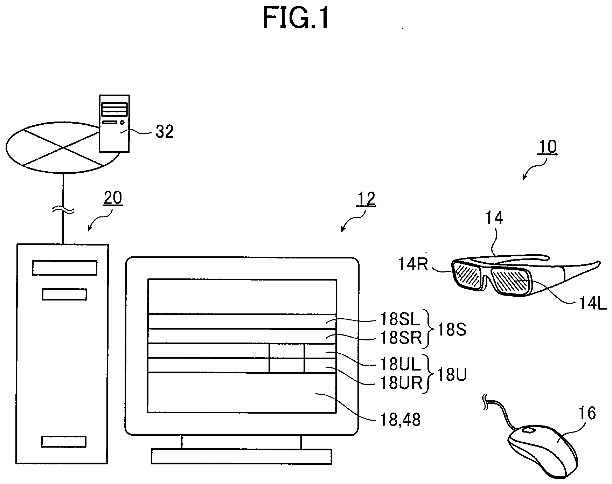

FIG. 1 is an appearance diagram illustrating an embodiment of a configuration of a parallax image display device according to the present invention. As shown in FIG. 1, a parallax image display device 10 according to the present invention includes a parallax image display unit 12, a pair of polarized glasses 14, an operation input unit 16, a console 20, and an image server 32.

As shown in FIG. 1, the parallax image display unit 12 that displays a space-division parallax image includes a parallax image display area 18 having a left-eye image display region (hereinafter referred to as the left-eye region) 18L for displaying a left-eye image and a right-eye image display region (hereinafter referred to as the right-eye region) 18R for displaying a right-eye image.

The parallax image display unit 12 also includes a polarizing filter 48 in which a polarization state of an arbitrary region can be operated, and the parallax image display unit 12 operates the polarizing filter 48 so that the polarization states of a region (left-eye region 18L) in which a left-eye image is displayed and a region (right-eye region 18R) in which a right-eye image is displayed are different from each other in the parallax image display area 18.

As a specific example of the polarizing filter, a liquid crystal panel capable of independently operating the polarization state of a parallax image, separately from a liquid crystal display for displaying a parallax image, or the like can be considered.

The polarizing filter utilizing a liquid crystal panel is disposed in front of the liquid crystal display for displaying a parallax image, and its polarization states for the left-eye region 18L and the right-eye region 18R of a parallax image can be operated using information on the parallax image.

By viewing the parallax image displayed on the parallax image display unit 12 through the polarized glasses 14, an observer recognizes only the left-eye image with the left eye through a polarizing lens 14L and recognizes only the right-eye image with the right eye through a polarizing lens 14R.

Accordingly, the observer's brain can perform a stereoscopic view on the basis of the left-eye image recognized with the left eye and the right-eye image recognized with the right eye.

The operation input unit 16 gives various instructions to the control unit 26 to be described later of the console 20. Examples of the instructions include an instruction to acquire the left-eye image and the right-eye image from the image server 32, an instruction to switch a stereoscopic display and a two-dimensional display in the parallax image display unit 12, and an instruction to store the generated parallax image in the image server 32.

### <Console>

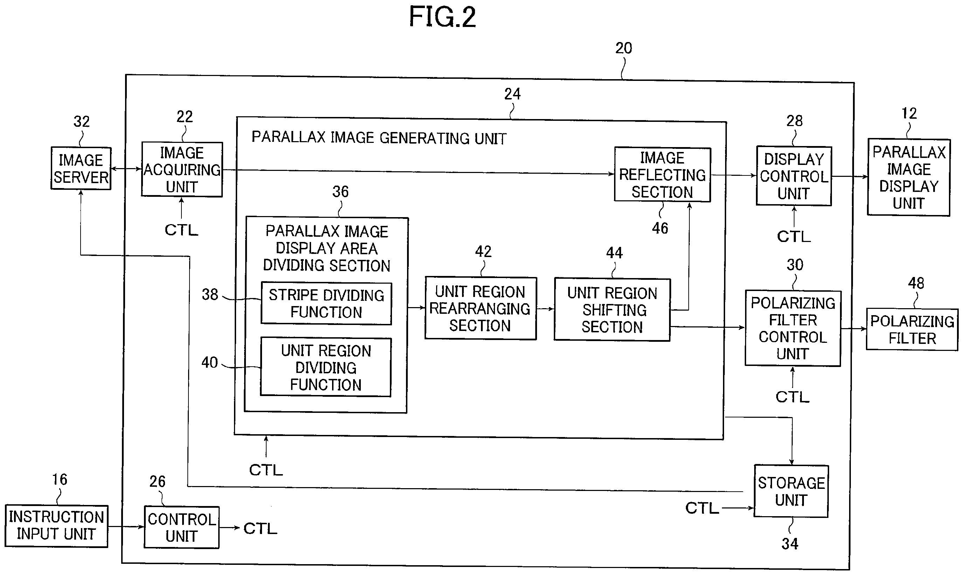

FIG. 2 is a block diagram illustrating a detailed configuration of the parallax image display device according to the present invention and in particular, shows the detailed configuration of the console 20. As shown in FIG. 2, the above console 20 includes an image acquiring unit 22, a parallax image generating unit 24, a control unit 26, a display control unit 28, a polarizing filter control unit 30, and a storage unit 34. The parallax image generating unit 24 includes a parallax image display area dividing section 36 having a stripe dividing function 38 and a unit region dividing function 40, a unit region rearranging section 42, a unit region shifting section 44, and an image reflecting section 46,.

Specifically, the console 20 is constituted of a computer including a CPU (Central Processing Unit), a RAM (main storage device), a hard disk, and the like. Actually, the CPU (Central Processing Unit), the RAM (main storage device), the hard disk, and the like work together to constitute the foregoing units and sections of the console 20.

The image acquiring unit 22 is controlled by the control unit 26 in accordance with an instruction from the instruction input unit 16 and acquires a left-eye image and a right-eye image which are stored in the image server 32 to enable a stereoscopic display.

The parallax image generating unit 24 reflects the left-eye image and the right-eye image in the left-eye region 18L and the right-eye region 18R as described above, and generates the parallax image.

Specifically, a stripe region set 18S composed of a left-eye stripe region 18SL and a right-eye stripe region 18SR is generated by dividing the parallax image display area 18 into a stripe pattern and further evenly dividing each stripe in a stripe width direction through the stripe dividing function 38 of the parallax image display dividing section 36.

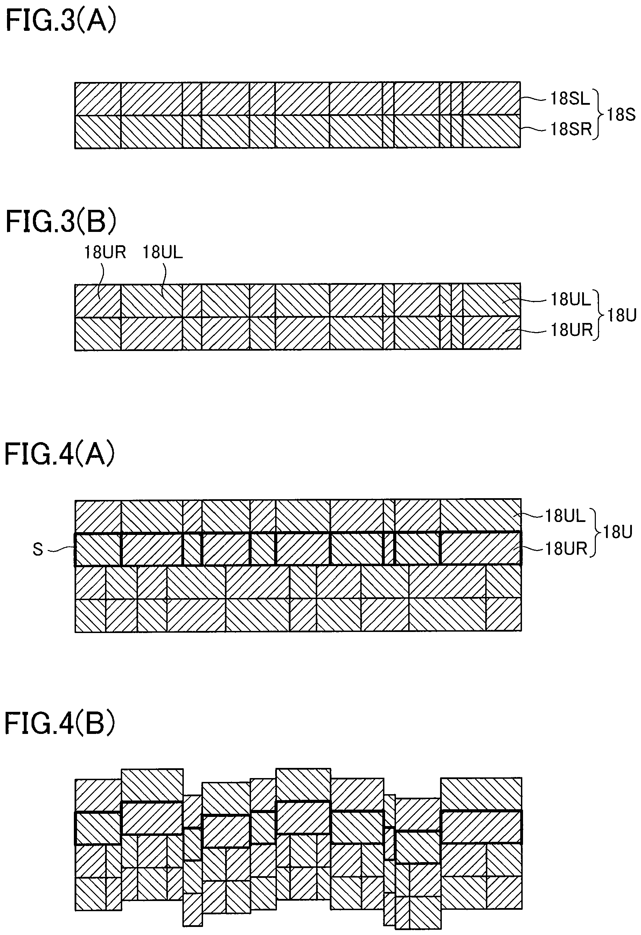

Then, as illustrated in FIG. 3(A), the above-mentioned stripe region set 18S is randomly divided through the unit region dividing function 40 of the parallax image dividing section 36 to generate unit region sets 18U each composed of the above-mentioned left-eye unit region 18UL and right-eye unit region 18UR.

In the randomly dividing process mentioned here, for example, assuming that the width of each stripe region set 18S in the stripe direction is 100 and a value obtained from a table of random numbers from 1 to 10 is set as the width of each unit region set 18U in the stripe direction, each stripe region set may be divided in the stripe width direction until an integrated value exceeds 100.

For example, when values sequentially obtained from the table of random numbers are 5, 10, 8, 2, 7, 7, 4, 1, 9, 10, 2, 10, 10, 5, 3, and 9 and the width in the stripe direction is defined as 100, the stripe region set can be divided into sixteen regions having widths of 5, 10, 8, 2, 7, 7, 4, 1, 9, 10, 2, 10, 10, 5, 3, and 7 (a part over 100 is rounded down at the final part).

Alternatively, for example, the number of times of dividing may be first determined by a table of random numbers from 1 to 99, and then the width of each unit region set 18U in the stripe direction may be determined from a table of random numbers from 1 to 99.

When the number of times of dividing determined by the table of random numbers is 5, six numerals are taken from the table of random numbers, and when the six numerals are 24, 34, 55, 11, 11, and 13, the stripe can be divided into six regions in such a manner that the width of 100 in the stripe direction is divided at ratios of 24/148, 34/148, 55/148, 11/148, 11/148, and 13/148.

Further alternatively, as a simpler manner, assuming that the number of pixels in the stripe direction is 960, numerals drawn from a table of random numbers from 1 to 99 are each defined as the number of pixels to be applied to a width of each unit region set 18U, and each stripe display region set 18S may be divided until the integrated value exceeds 960. Various methods can be considered and a method considered as most suitable for the circumstances can be selected.

Then, as illustrated in FIG. 3(B), every other unit region set 18U is rearranged by the unit region rearranging section 42 so that the left-eye unit region 18UL and the right-eye unit region 18UR are alternately arranged in the stripe direction.

After the unit region sets 18U are alternately rearranged, one stripe S of the parallax image display area 18 may be selected by the unit region shifting section 44 as illustrated in FIG. 4(A) and the left-eye unit regions 18UL and the right-eye unit regions 18UR constituting the selected stripe may be randomly shifted by predetermined widths in the stripe width direction by the unit region shifting section 44 as illustrated in FIG. 4(B).

In the process of randomly shifting in the stripe width direction, for example, assuming that the stripe width is defined as 100, two numerals may be taken from a table of random numbers from 0 to 99 so that the left-eye unit region 18UL and the right-eye unit region 18UR of the selected stripe are each shifted in the stripe width direction by the amount of secondly-taken numeral so as to be shifted in a positive direction (for example, the upward direction in FIG. 4) when the firstly-taken numeral is an even number and shifted in a negative direction (for example, the downward direction in FIG. 4) when the firstly-taken numeral is an odd number.

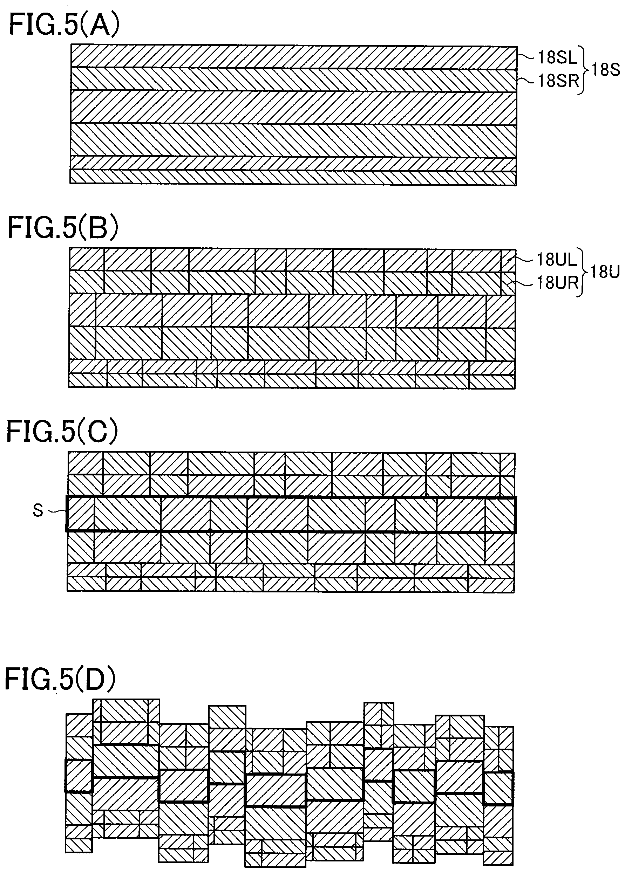

The left-eye unit region 18UL and the right-eye unit region 18UR constituting one unit region set 18U are the same in shape and size, but the shape and size thereof vary depending on each unit region set (particularly, the size in the stripe direction). The left-eye stripe region 18SL and the right-eye stripe region 18SR constituting one stripe region set 18S are equal to each other in the stripe width, but the stripe widths of the stripe region sets 18S may be different as illustrated in FIG. 5.

Accordingly, the region areas of the left-eye region 18L and the right-eye region 18R can be kept substantially equal to each other.

The minimum unit used to express the stripe width of the left-eye stripe region 18SL and the right-eye stripe region 18SR is the width of a pixel, but the stripe width does not need to be the same as the width of a pixel as described above and, for example, one width may be set to correspond to 2 to 10 pixels or may be set to be larger than that.

The left-eye stripe region 18SL is composed of a plurality of left-eye unit regions 18UL and the right-eye stripe region 18SR is composed of a plurality of right-eye unit regions 18UR. That is, the stripe region set 18S is composed of a plurality of unit region sets 18U.

The image reflecting section 46 generates a parallax image by reflecting the left-eye image and the right-eye image so that the left-eye image is displayed in the left-eye region 18L and the right-eye image is displayed in the right-eye region 18R in the parallax image display area in which the left-eye unit regions 18UL and the right-eye unit regions 18UR are alternately arranged as described above.

The control unit 26 receives an instruction from the instruction input unit 16 and controls operations of the respective units of the parallax image display device 10. As described above, the image acquiring unit 22 is caused to acquire the left-eye image and the right-eye image, the parallax image generating unit 24 is caused to generate a parallax image, the parallax image display unit 12 is caused to display the parallax image through the display control unit 28 to be described later, and the polarizing filter control unit 30 to be described later is caused to control the polarization state of the polarizing filter 48 disposed on the parallax image display unit 12 in accordance with the parallax image. The generated parallax image is stored in the storage unit 34 to be described later, or the generated parallax image may be stored in an image server through the storage unit 34.

The display control unit 28 two-dimensionally displays the left-eye image and the right-eye image on the parallax image display unit 12 in response to an instruction from the instruction input unit 16, in addition to displaying the parallax image on the parallax image display unit 12 as described above.

The polarizing filter control unit 30 controls the polarizing filter 48 so that different polarization states are separately applied to the left-eye region 18L and the right-eye region 18R on the basis of the parallax image from the parallax image generating unit 24 (parallax image display area 18).

The storage unit 34 temporarily stores the parallax image generated by the parallax image generating unit 24 along with the left-eye image and the right-eye image and stores image data of these images in the image server 32 in response to an instruction from the instruction input unit 16.

The console 20 generates the parallax image on the basis of the left-eye image and the right-eye image enabling a stereoscopic view as described above. The generated parallax image is displayed on the parallax image display unit 12 having the parallax image display area 18 composed of the left-eye region 18L and the right-eye region 18R, and is stored in the image server 32 if necessary.

The image server 32 suffices if it can store the left-eye image and the right-eye image enabling a stereoscopic view as image data, and various recording media in which the image data of the left-eye image and the right-eye image is stored and recording medium reading devices may be used instead of the image server.

The configuration of the parallax image display device 10 according to the present invention is as explained above.

Next, the operation of the parallax image display device 10 according to the present invention will be described below.

Upon receiving an instruction from the instruction input unit 16, the image acquiring unit 22 acquires the image data of the left-eye image and the right-eye image enabling a stereoscopic view. The acquired left-eye image and the acquired right-eye image are output to the parallax image generating unit 24.

In the parallax image generating unit 24, the parallax image display area 18 is divided into the stripe pattern through the stripe dividing function 38 of the parallax image display area dividing section 36, and each stripe is further divided evenly in the stripe width direction, thereby obtaining a stripe region set 18S composed of the left-eye stripe region 18SL and the right-eye stripe display region 18SR.

Further, each stripe region set is divided into random widths in the stripe direction through the unit region dividing function 40 of the parallax image display area dividing section 36 to generate unit region sets 18U each composed of the left-eye unit region 18UL and the right-eye unit region 18UR.

The unit region sets 18U are alternately rearranged to invert in the stripe width direction (vertically) by the unit region rearranging section 42 so that the left-eye-unit regions 18UL and the right-eye unit regions 18UR are alternately arranged in the stripe direction.

After the unit region sets 18U are alternately rearranged by the unit region rearranging section 42, one stripe S may be selected by the unit region shifting section 44 to randomly shift the parallax image display area 18 in the stripe width direction (vertically) on the basis of the left-eye unit regions 18UL and the right-eye unit regions 18UR constituting the selected stripe S.

It should be noted that, for example, a display area protruding upward from the display screen can be folded to appear at the bottom of the display screen, and similarly, a display area protruding downward from the display screen can be folded to appear at the top.

By being thus-folded and displayed, it is possible to keep the region areas of the left-eye region and the right-eye region constant.

The image reflecting section 46 generates the parallax image by reflecting the left-eye image and the right-eye image in the left-eye region 18UL and the right-eye region 18UR of the parallax image display area 18 arranged and shifted as described above.

The parallax image generated by the parallax image generating unit 24 is displayed on the parallax image display unit 12 through the display control unit 28 and is temporarily stored in the storage unit 34, or may be stored in the image server 32 in accordance with an instruction from the instruction input unit 16.

The polarizing filter control unit 30 acquires information on the parallax image display area 18 which is divided into unit region sets having different sizes by each partial display area 18D and which is composed of the right-eye unit regions 18UR and the left-eye unit regions 18UL, and controls the polarizing filter 48.

The polarizing filter 48 is controlled so that the polarization states for the right-eye region 18R and the left-eye region 18L of the parallax image display area 18 are different from each other, and transmits light of different polarization states from a filter region corresponding to the right-eye region 18R and a filter region corresponding to the left-eye region 18L.

Accordingly, an observer can perform a stereoscopic view by observing the parallax image displayed on the parallax image display unit 12 with the polarized glasses 14 by the use of the parallax image display device 10 according to the present invention.

The operation of the parallax image display device 10 according to the present invention is as explained above.

### <Parallax Image Generation method>

A method of generating a parallax image by the parallax image display device according to the present invention will be described below.

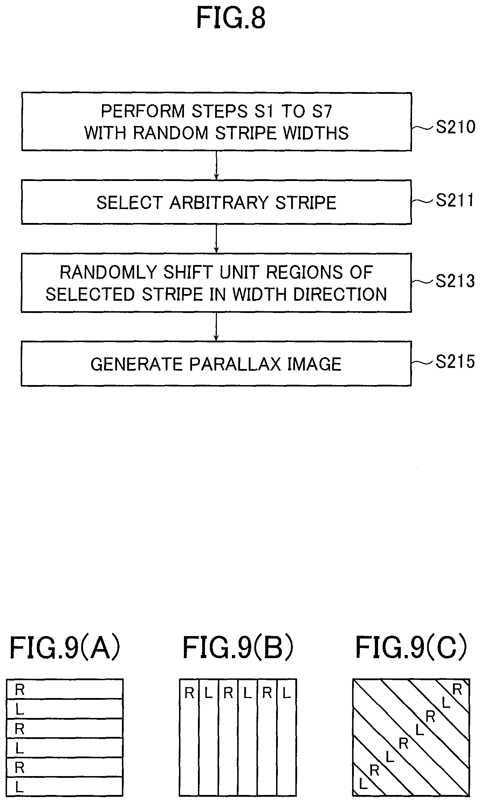

Since a general parallax image is composed of stripes (the left-eye stripe region 18SL and the right-eye stripe region 18SR) in a predetermined direction (e.g., a vertical, horizontal, or oblique direction) as illustrated in FIGS. 9(A) to 9(C) for example, the left-eye image and the right-eye image acquired by the console 20 may be spatially divided into stripes having the same width and may be alternately arranged.

However, as described above, it cannot be said that the parallax image generated by just alternately arranging the left-eye stripe regions 18SL and the right-eye stripe regions 18SR is a preferable parallax image, because moire easily occurs as described above.

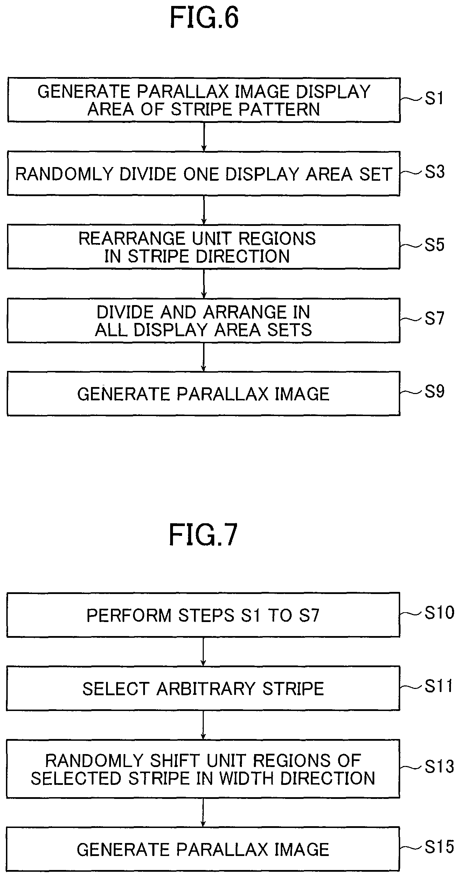

Therefore, parallax image generating methods according to first to third examples of the present invention in which moire does not easily occur will be described with reference to the flowcharts illustrated in FIGS. 6 to 8.

In the parallax image display device 10 according to the present invention, the generation of a parallax image in all the first to third examples is performed by the parallax image generating unit 24, and the generated parallax image is displayed on the parallax image display unit 12 and temporarily stored in the storage unit 34.

### <First Example>

The parallax image generating method according to the first example will be described below with reference to the flowchart illustrated in FIG. 6.

First, a display screen (parallax image display area 18) is divided into a stripe pattern having stripes of the same width, each resulting stripe is evenly divided into two parts in the stripe width direction, and the left-eye region 18L and the right-eye region 18R are allocated, whereby the parallax image display area 18 (for example, FIG. 9(A) or the like) in which the left-eye stripe regions 18SL and the right-eye stripe regions 18SR are alternately arranged in a stripe pattern is generated (step S1).

When dividing the display screen, the width of the stripes may be first determined and then the display screen may be divided based thereon, as described above. However, in the case where the pixel size of the left-eye image and the right-eye image is determined to be 1280x960 pixels or the like in advance, the width of the stripes may be determined depending on the pixel size so that the left-eye image and the right-eye image are evenly allocated and the display screen may be divided with those stripes.

Next, in the parallax image display area 18 having the above-mentioned stripe pattern, as illustrated in FIG. 3(A), a left-eye stripe region 18SL and a right-eye stripe region 18SR are set as one stripe region set 18S, and each stripe region set is divided into random widths in the stripe direction (in the horizontal direction in FIG. 3(A)) to form a unit region set 18U composed of a left-eye unit region 18UL and a right-eye unit region 18UR (step S3). This randomly-dividing process is the same as that described for the parallax image display device 10.

Then, in the parallax image display area 18, the left-eye unit region 18UL and the right-eye unit region 18UR of a unit region set 18U are alternately exchanged so that the left-eye unit regions 18UL and the right-eye unit regions 18UR are alternately arranged in the stripe direction (step S5).

For example, a stripe region set 18S is arranged so that the left-eye unit regions 18UL and the right-eye unit regions 18UR of alternating unit region sets 18U are exchanged as illustrated in FIG. 3(B).

The same operation is performed on all the stripe region sets 18S constituting the parallax image display area 18. The sizes of the unit region sets 18U in the stripe direction vary depending on the stripe region set 18S. Accordingly, it is possible to generate the parallax image display area 18 in which the left-eye regions 18L (left-eye unit regions 18UL) and the right-eye regions 18R (right-eye unit regions 18UR) are randomly arranged when the parallax image display area is seen as a whole (step S7).

Finally, the left-eye image corresponding to the left-eye region 18L and the right-eye image corresponding to the right-eye region 18R are allocated to generate a parallax image (step S9) .

Accordingly, it is possible to generate a parallax image in which the left-eye regions 18L and the right-eye regions 18R are randomly arranged and the right-eye image and the left-eye image have the same information volume.

### <Second Example>

In the parallax image according to the first example, the left-eye unit regions 18UL and the right-eye unit regions 18UR are randomly arranged in the stripe direction, but since the stripe width is constant, the left-eye unit regions 18UL and the right-eye unit regions 18UR are arranged at constant intervals in the stripe width direction (vertical direction in FIG. 3).

In the case where the stripes are regularly arranged with such constant stripe pitch, a possibility of occurrence of moire as described above cannot be denied. Therefore, it is preferable that the stripes be irregularly arranged also in the stripe width direction.

The parallax image generating method according to the second example will be described below with reference to the flowchart illustrated in FIG. 7.

First, steps S1 to S7 of the first example are performed (step S10), and then an arbitrary stripe S is selected from the parallax image display area 18 (step S11). Here, the second stripe from the top is selected, for example, as indicated by the emphasized outline in FIG. 4(A).

Then, the left-eye unit regions 18UL and the right-eye unit regions 18UR of the selected stripe S are randomly shifted in the stripe width direction within a range not exceeding the width of the stripe S. The whole display area is shifted on the basis of the shift of the left-eye unit regions 18UL and the right-eye unit regions 18UR of the stripe S in the stripe width direction (step S13). Here, the process of randomly shifting is the same as that described for the above-mentioned parallax image display device 10.

Accordingly, the parallax image display area 18 is generated in which the stripe pitch differs in the stripe width direction as illustrated in FIG. 4(B). As described above, a part protruding upward from the display screen is folded to appear at the bottom and a part protruding downward from the display screen is folded to appear at the top.

In the parallax image display area 18 generated by randomly shifting the left-eye unit regions 18UL and the right-eye unit regions 18UR of the selected stripe S in the stripe width direction, the left-eye image is allocated to the left-eye region 18L and the right-eye image is allocated to the right-eye region 18R to generate a parallax image (step S15).

The reason why the unit regions are shifted in the stripe width direction within a range not exceeding the width of the stripe is that when a width of shifting is equal to the width of the stripe, the shift in the stripe width direction is meaningless.

### <Third Example>

In the parallax images according to the first example and the second example, the stripe width of the stripe pattern is uniform. However, the stripe width may be random.

In this case, in order to make the information volumes of the left-eye image and the right-eye image in the parallax image substantially equal to each other (in order to make the display areas of the left-eye region and the right-eye region substantially equal to each other), the stripe width of one stripe region set 18S may be random in the parallax image display area 18 divided in a stripe pattern, but the stripe widths of the left-eye stripe region 18SL and the right-eye stripe region 18SR constituting one display area set 18 needs to be equal to each other.

In order to make the stripe widths random, for example, the maximum width of the left-eye stripe region 18SL and the right-eye stripe region 18SR is defined as corresponding to 10 pixels, the stripe width of one stripe region set S is set to correspond to any of 2, 4 to 18, and 20 pixels (only even numbers), and the stripe region sets 18S are randomly arranged on the display screen using a table of random numbers or the like.

For example, the stripe widths of the stripe region sets 18S are determined sequentially from the top of the display screen on the basis of numerals acquired from the table of random numbers. The stripe widths are determined in such a manner that, in the table of random numbers from 0 to 99, 2 pixels are given for numerals 0 to 9, 4 pixels are given for numerals 10 to 19, and 20 pixels are given for numerals 90 to 99.

By allocating the left-eye stripe regions 18SL and the right-eye stripe regions 18SR in the up-down direction (in the stripe width direction) in the respective, thus-arranged stripe region sets 18S, the left-eye stripe regions 18SL and the right-eye stripe regions 18SR are alternately arranged on the display screen with their stripe widths corresponding to 1 to 10 pixels as illustrated in FIG. 5(A).

Next, the parallax image generating method according to the third example will be described below with reference to the flowchart illustrated in FIG. 8.

In the parallax image display area 18 of which the stripe width is random as illustrated in FIG. 5(A), similarly to the first example, each stripe region set 18S is divided into random widths in the stripe direction as illustrated in FIG. 5(B), and the left-eye unit region 18UL and the right-eye unit region 18UR of each unit region set 18U are alternately exchanged in the stripe width direction as illustrated in FIG. 5(C) (step S210).

These are the same as steps S1 to S7 in the first example.

Similarly to FIG. 4(B) of the second example, the left-eye image and the right-eye image may be allocated to the parallax image display area 18 illustrated in FIG. 5(C) to generate a parallax image.

Then, similarly to step S11 in the second example, an arbitrary stripe S is selected (step S211). Here, for example, as illustrated in FIG. 5(C), the third stripe pattern from the top is selected.

Similarly to step S13 in the second example, the parallax image display area 18 is randomly shifted in the stripe width direction on the basis of the left-eye unit regions 18UL and the right-eye unit regions 18UR of the selected stripe S (step S213). The parallax image display area 18 is to have such a shape as illustrated in FIG. 5(D).

Similarly to the second embodiment, the display areas protruding from the display screen has only to be folded to appear at the top or bottom.

Finally, in the generated parallax image display area 18, the left-eye image is allocated to the left-eye region 18L and the right-eye image is allocated to the right-eye region 18R to generate a parallax image (step S215).

In the third example, since the pitches in the vertical direction and the horizontal direction (the stripe width direction and the stripe direction) are variously different, it is possible to generate a parallax image in which the left-eye regions 18L and the right-eye regions 18R are considered as being divided and arranged on the display screen in a substantially random manner.

### <Parallax Image Print>

The parallax image generated using the above-mentioned parallax image generation method may be output as a parallax image print by printing the parallax image on a paper sheet through an unshown printer or the like as well as being displayed on the parallax image display unit 12 of the parallax image display device 10.

This is because the present invention relates to a space-division stereoscopic display and does not require electrical driving.

In this case, after the parallax image is printed on a paper sheet as a parallax image print, a polarizing film corresponding to the left-eye region 18L and the right-eye region 18R of the parallax image is pasted on the printed parallax image.

For example, an elliptical polarizing plate described in JP 2009-193014 A can be used as the polarizing film.

Since the elliptical polarizing plate can be manufactured with an arbitrarily-changed polarization pattern, the elliptical polarizing plate of which the polarization pattern corresponds to the left-eye region 18L and the right-eye region 18R is manufactured and pasted on the parallax image as the polarizing film.

By viewing with the polarized glasses 14 the parallax image print on which the polarizing film is pasted, an observer recognizes only the left-eye image with the left eye through the polarizing lens 14L and recognizes only the right-eye image with the right eye through the polarizing lens 14R, and accordingly, the observer can perform a stereoscopic view on the basis thereof as described above.

While the parallax image display device, the parallax image generation method, and the parallax image print according to the present invention have been described in detail, the present invention is not limited to the above-mentioned aspects and may be improved or modified in various forms without departing from the scope of the present invention.

### DESCRIPTION OF SYMBOLS

- 10:: PARALLAX IMAGE DISPLAY DEVICE
- 12:: PARALLAX IMAGE DISPLAY UNIT
- 14:: POLARIZED GLASSES
- 16:: OPERATION INPUT UNIT
- 18:: PARALLAX IMAGE DISPLAY AREA
- 18L:: LEFT-EYE REGION (LEFT-EYE IMAGE DISPLAY REGION)
- 18R:: RIGHT-EYE REGION (RIGHT-EYE IMAGE DISPLAY REGION)
- 18U:: UNIT REGION SET
- 18UL:: LEFT-EYE UNIT REGION
- 18UR:: RIGHT-EYE UNIT REGION
- 18S:: STRIPE REGION SET
- 18SL:: LEFT-EYE STRIPE RESION
- 18SR:: RIGHT-EYE STRIPE RESION
- 20:: CONSOLE
- 22:: IMAGE ACQUIRING UNIT
- 24:: PARALLAX IMAGE GENERATING UNIT
- 26:: CONTROL UNIT
- 28:: DISPLAY CONTROL UNIT
- 30:: POLARIZING FILTER CONTROL UNIT
- 34:: STORAGE UNIT
- 36:: PARALLAX IMAGE DIVIDING MEANS
- 38:: STRIPE DIVIDING FUNCTION
- 40:: UNIT REGION DIVIDING FUNCTION
- 42:: UNIT REGION INVERTING MEANS
- 44:: UNIT REGION SHIFTING MEANS
- 46:: IMAGE RELFECTING MEANS
- 48:: POLARIZING FILTER

## Claims

1. A parallax image display device (10) comprising:
an image acquiring unit (22) that acquires a left-eye image and a right-eye image which can be stereoscopically viewed by generating a parallax image;
a parallax image display unit (12) that has a parallax image display area including a left-eye region for displaying the left-eye image and a right-eye region for displaying the right-eye image; and
a parallax image generating unit (24) that generates the parallax image,
wherein the parallax image display area (18) is composed of unit region sets (18U), each having a rectangular left-eye unit region (18UL) constituting the left-eye region and a right-eye unit region 18UR) which is same in shape as the left-eye unit region and which constitutes the right-eye region,
wherein the parallax image generating unit (24) generates the parallax image by displaying the left-eye image in the left-eye region and displaying the right-eye image in the right-eye region, wherein the parallax image generating unit (24) includes a parallax image display area dividing section (36), a unit region rearranging section (42), and an image reflecting section (46),
wherein the parallax image display area dividing section (36) has a stripe dividing function (38) which divides the parallax image display area (18) into stripes (18S), further divides each stripe in a stripe width direction into a left-eye stripe region (18SL) and a right-eye stripe region (18SR) having a same width, the left-eye stripe region and the right-eye stripe region being defined as a stripe region set (18S), and arranges the left-eye stripe regions (18SL) and the right-eye stripe regions (18SR) so as to be alternately placed in the stripe width direction, and a unit region dividing function (40) which divides the stripe region set (18S) into random widths in a stripe direction to generate the unit region sets (18U) having different sizes in the stripe direction,
wherein the unit region rearranging section (42) alternately rearranges the unit region sets (18U) each composed of the left-eye unit region (18UL) and the right-eye unit region (18UR) so that the left-eye unit region (18UL) and the right-eye unit region (18UR) are alternately arranged in the stripe direction, and
wherein the image reflecting section (46) generates the parallax image by reflecting the left-eye image in the left-eye region of the parallax image display area (18) and reflecting the right-eye image in the right-eye region of the parallax image display area, the parallax image display further comprising a polarizing filter (48) that is disposed in front of the parallax image display unit (12) and that can be operated on the basis of the parallax image so that a polarization state of the left-eye region and a polarization state of the right-eye region are different from each other.

2. The parallax image display device according to claim 1, **characterized in that** the parallax image display area dividing section (36) has a stripe dividing function (38) that divides the parallax image display area (18) into stripes having the same width.

3. The parallax image display device according to claim 1,
**characterized in that**
wherein the parallax image display area dividing section (36) has a stripe dividing function (38) which divides the parallax image display area (18) into stripes having different widths.

4. The parallax image display device according to claim 2 or 3,
wherein the parallax image generating unit (24) further includes a unit region shifting section (44), and
wherein the unit region shifting section (44) selects an arbitrary stripe in the parallax image display area (18) having been subjected to the rearranging and randomly shifts in the stripe width direction the left-eye unit regions (18UL) and the right-eye unit regions (18UR) constituting the selected stripe (S), and thereby the whole display area is shifted on the basis of the shift of the left-eye unit regions (18UL) and the right-eye unit regions (18UR).

5. The parallax image display device according to any one of claims 2 to 4,
wherein the stripe direction is a horizontal direction of a display screen.

6. The parallax image display device according to any one of claims 2 to 4,
wherein the stripe direction is a vertical direction of a display screen.

7. The parallax image display device according to any one of claims 2 to 4,
wherein the stripe direction is an oblique direction of a display screen.

8. A parallax image generating method of generating a parallax image by spatially dividing a left-eye image and a right-eye image used for displaying a stereoscopic view and reflecting the left-eye image and the right-eye image in a left-eye region and a right-eye region of a parallax image display area (18), respectively, comprising steps of:
dividing the parallax image display area into stripes (18S);
further dividing each stripe (18S) in a stripe width direction into a left-eye stripe region (18SL) and a right-eye stripe region (18SR) and arranging the left-eye stripe regions and the right-eye stripe regions so as to be alternately placed in the stripe width direction, the left-eye stripe region and the right-eye stripe region being defined as a stripe region set (18S);
dividing the stripe region set (18S) into random widths in the stripe direction to generate unit region sets (18U) having different sizes in the stripe direction;
alternately rearranging the unit region sets each composed of the left-eye unit region (18UL) and the right-eye unit region (18UR) so that the left-eye unit region (18UL) and the right-eye unit region (18UR) are alternately arranged in the stripe direction;
generating the parallax image by reflecting the left-eye image in the left-eye region of the parallax image display area and reflecting the right-eye image in the right-eye region of the parallax image display area; and
disposing in front of the parallax image a polarizing filter (48) having a polarization state for the right-eye region and a polarization state for the left-eye region which are different from each other.

9. The method of claim 8, in which the step of dividing the parallax image area into stripes results into stripes having the same width.

10. The method of claim 8, in which the step of dividing the parallax image display area into stripes results in stripes having different widths.

11. The parallax image generating method according to claim 9 or 10, further comprising a step of:
selecting an arbitrary stripe in the parallax image display area having been subjected to the rearranging and randomly shifting in the stripe width direction the left-eye unit regions (18UL) and the right-eye unit regions (18UR) constituting the selected stripe, and thereby, the whole display area is shifted on the basis of the shift of the left-eye unit regions (18UL) and the right-eye unit regions (18UR).

12. A parallax image print, wherein the parallax image generated by the parallax image generating method according to any one of claims 9 to 10 is printed.

## Patentansprüche

1. Parallaxenbild-Anzeigevorrichtung (10), umfassend:
eine Bilderfassungseinheit (22), die ein Linksaugenbild und ein Rechtsaugenbild erfasst, die durch Erzeugen eines Parallaxenbilds stereoskopisch betrachtet werden können;
eine Parallaxenbild-Anzeigeeinheit (12), die eine Parallaxenbild-Anzeigefläche mit einer Linksaugenzone zum Anzeigen des Linksaugenbilds und eine Rechtsaugenzone zum Anzeigen des Rechtsaugenbilds enthält; und
eine Parallaxenbild-Erzeugungseinheit (24), die das Parallaxenbild erzeugt,
wobei die Parallaxenbild-Anzeigefläche (18) zusammengesetzt ist aus Einheitszonensätzen (18U), die jeweils eine rechteckige Linksaugeneinheitszone (18UL), welche die Linksaugenzone bildet, und eine Rechtsaugeneinheitszone (18UR), die die gleiche Form hat wie die Linksaugeneinheitszone und die Rechtsaugenzone bildet, aufweist,
wobei die Parallaxenbild-Erzeugungseinheit (24) das Parallaxenbild dadurch erzeugt, dass das Linksaugenbild in der Linksaugenzone angezeigt wird und das Rechtsaugenbild in der Rechtsaugenzone,
wobei die Parallaxenbild-Erzeugungseinheit (24) einen Parallaxenbild-Anzeigenflächen-Unterteilungsabschnitt (36), einen Einheitszonen-Umordnungsabschnitt (42) und einen Bildreflexionsabschnitt (46) aufweist,
von denen der Parallaxenbild-Anzeigeflächen-Unterteilungsabschnitt (36) eine Streifenunterteilungsfunktion (38) aufweist, die die Parallaxenbild-Anzeigefläche (18) in Streifen (18S) aufteilt, weiterhin jeden Streifen in Streifen-Breitenrichtung in eine Linksaugen-Streifenzone (18SL) und eine Rechtsaugen-Streifenzone (18SR) gleicher Breite unterteilt, von denen die Linksaugen-Streifenzone und die Rechtsaugen-Streifenzone als ein Streifenzonensatz (18S) definiert sind, und die Linksaugen-Streifenzone (18SL) und die Rechtsaugen-Streifenzone (18SR) derart anordnet, dass sie in Streifen-Breitenrichtung abwechselnd plaziert sind, und eine Einheitszonen-Unterteilungsfunktion (40) aufweist, welche den Streifenzonensatz (18S) in zufällige Breiten in Streifenrichtung unterteilt, um die Einheitszonensätze (18U) mit unterschiedlichen Größen in Streifenrichtung zu erzeugen,
wobei der Einheitszonen-Umordnungsabschnitt (42) die Einheitszonensätze (18U), jeweils bestehend aus der Linksaugen-Einheitszone (18UL) und der Rechtsaugen-Einheitszone (18UR), abwechselnd derart umordnet, dass die Linksaugen-Einheitszone (18UL) und die Rechtsaugen-Einheitszone (18UR) in Streifenrichtung abwechselnd angeordnet sind, und
wobei der Bildreflexionsabschnitt (46) das Parallaxenbild dadurch erzeugt, dass er das Linksaugenbild in der Linksaugenzone der Parallaxenbild-Anzeigefläche (18) reflektiert und das Rechtsaugenbild in der Rechtsaugenzone der Parallaxenbild-Anzeigefläche reflektiert, wobei die Parallaxenbild-Anzeige weiterhin ein Polarisationsfilter (48) enthält, das vor der Parallaxenbild-Anzeige einheit (12) angeordnet ist und auf der Grundlage des Parallaxenbilds derart betreibbar ist, dass ein Polarisationszustand der Linksaugenzone und ein Polarisationszustand der Rechtsaugenzone voneinander verschieden sind.

2. Parallaxenbild-Anzeigevorrichtung nach Anspruch 1, **dadurch gekennzeichnet, dass** der Parallaxenbild-Anzeigeflächen-Unterteilungsabschnitt (36) eine Streifenunterteilungsfunktion (38) enthält, welche die Parallaxenbild-Anzeigefläche (18) in Streifen gleicher Breite unterteilt.

3. Parallaxenbild-Anzeigevorrichtung nach Anspruch 1, **dadurch gekennzeichnet, dass** der Parallaxenbild-Anzeigeflächen-Unterteilungsabschnitt (36) eine Streifenunterteilungsfunktion (38) aufweist, die die Parallaxenbild-Anzeigefläche (18) in Streifen unterschiedlicher Breite unterteilt.

4. Parallaxenbild-Anzeigevorrichtung nach Anspruch 2 oder 3,
bei der die Parallaxenbild-Erzeugungseinheit (24) weiterhin einen Einheitszonen-Verschiebeabschnitt (44) enthält, und
wobei der Einheitszonen-Verschiebeabschnitt (44) einen beliebigen Streifen in der Parallaxenbild-Anzeigenfläche (18), die der Umordnung unterzogen wurde, auswählt und auf Zufallsbasis die Linksaugen-Einheitszone (18UL) und die Rechtsaugen-Einheitszone (18UR), die den ausgewählten Streifen (S) bilden, in Streifen-Breitenrichtung verschiebt, um dadurch die gesamte Anzeigefläche auf der Grundlage der Verschiebung der Linksaugen-Einheitszonen (18UL) und der Rechtsaugen-Einheitszonen (18UR) zu verschieben.

5. Parallaxenbild-Anzeigevorrichtung nach einem der Ansprüche 2 bis 4, bei der die Streifenrichtung eine Horizontalrichtung eines Anzeigebildschirms ist.

6. Parallaxenbild-Anzeigevorrichtung nach einem der Ansprüche 2 bis 4, bei der die Streifenrichtung eine Vertikalrichtung eines Anzeigebildschirms ist.

7. Parallaxenbild-Anzeigevorrichtung nach einem der Ansprüche 2 bis 4, bei der die Streifenrichtung eine schräge Richtung eines Anzeigebildschirms ist.

8. Parallaxenbild-Erzeugungsverfahren zum Erzeugen eines Parallaxenbilds durch räumliches Unterteilen eines Linksaugenbilds und eines Rechtsaugenbilds, die zum Anzeigen einer stereoskopischen Ansicht verwendet werden, und durch Reflektieren des Linksaugenbilds und des Rechtsaugenbilds in einer Linksaugenzone bzw. einer Rechtsaugenzone einer Parallaxenbild-Anzeigefläche (18), umfassend folgende Schritte:
Unterteilen der Parallaxenbild-Anzeigefläche in Streifen (18S);
weiterhin Unterteilen jedes Streifens (18S) in Streifen-Breitenrichtung in eine Linksaugen-Streifenzone (18SL) und eine Rechtsaugen-Streifenzone (18SR) und Anordnen der Linksaugen-Streifenzonen und der Rechtsaugen-Streifenzonen derart, dass diese in Streifen-Breitenrichtung abwechselnd plaziert sind, wobei die Linksaugen-Streifenzone und die Rechtsaugen-Streifenzone als ein Streifenzonensatz (18S) definiert sind;
Unteilen des Streifenzonensatzes (18S) in beliebige Breiten in der Streifenrichtung, um Einheitszonensätze (18U) unterschiedlicher Größen in Streifenrichtung zu erzeugen;
abwechselndes Umordnen der Einheitszonensätze, jeweils bestehend aus der Linksaugen-Einheitszone (18UL) und der Rechtsaugen-Einheitszone (18UR) derart, dass die Linksaugen-Einheitszone (18UL) und die Rechtsaugen-Einheitszone (18UR) in der Streifenrichtung abwechselnd angeordnet sind;
Erzeugen des Parallaxenbilds durch Reflektieren des Linksaugenbilds in der Linksaugenzone der Parallaxenbild-Anzeigefläche und Reflektieren des Rechtsaugenbilds in der Rechtsaugenzone der Parallaxenbild-Anzeigefläche, und
Anordnen eines Polarisationsfilters (48) mit einem Polarisationszustand für die Rechtsaugenzone und einem Polarisationszustand für die Linksaugenzone, die verschieden voneinander sind, vor dem Parallaxenbild.

9. Verfahren nach Anspruch 8, bei dem der Schritt des Unterteilens der Parallaxenbild-Fläche in Streifen zu Streifen gleicher Breite führt.

10. Verfahren nach Anspruch 8, bei dem der Schritt des Unterteilens der Parallaxenbild-Anzeigefläche in Streifen zu Streifen unterschiedlicher Breiten führt.

11. Parallaxenbild-Erzeugungsverfahren nach Anspruch 9 oder 10, weiterhin umfassen den Schritt:
Auswählen eines beliebigen Streifens in der Parallaxenbild-Anzeigefläche, der der Umordnung unterzogen wurde, und beliebiges Verschieben in Streifen-Breitenrichtung der Linksaugen-Einheitszonen (18UL) und der Rechtsaugen-Einheitszonen (18UR), die den ausgewählten Streifen bilden, um dadurch die gesamte Anzeigefläche auf der Grundlage der Verschiebung der Linksaugen-Einheitszonen (18UL) und der Rechtsaugen-Einheitszonen (18UR) zu verschieben.

12. Parallaxenbildausdruck, bei dem das durch das Parallaxenbild-Erzeugungsverfahren nach einem der Ansprüche 9 bis 10 erzeugte Bild ausgedruckt ist.

## Revendications

1. Dispositif d'affichage d'image à parallaxe (10), comprenant :
une unité d'acquisition d'image (22), laquelle acquiert une image d'oeil gauche et une image d'oeil droit, lesquelles peuvent être vues de manière stéréoscopique en générant une image à parallaxe ;
une unité d'affichage d'image à parallaxe (12), laquelle présente une zone d'affichage d'image à parallaxe incluant une région d'oeil gauche pour afficher l'image d'oeil gauche et une région d'oeil droit pour afficher l'image d'oeil droit, et
une unité de génération d'image à parallaxe (24), laquelle génère l'image à parallaxe,
dans lequel la zone d'affichage d'image à parallaxe (18) est composée de jeux de régions unitaires (18U), chacune présentant une région unitaire d'oeil gauche rectangulaire (18UL) constituant la région d'oeil gauche et une région unitaire d'oeil droit (18UR), laquelle présente la même forme que la région unitaire d'oeil gauche et constitue la région d'oeil droit ;
dans lequel l'unité de génération d'image à parallaxe (24) génère l'image à parallaxe en affichant l'image d'oeil gauche dans la région d'oeil gauche et en affichant l'image d'oeil droit dans la région d'oeil droit ;
dans lequel l'unité de génération d'image à parallaxe (24) inclut une section de division de zone d'affichage d'image à parallaxe (36), une section de ré-agencement de région unitaire (42), et une section de réflexion d'image (46) ;
dans lequel la section de division de zone d'affichage d'image à parallaxe (36) présente une fonction de division de bande (38), laquelle divise la zone d'affichage d'image à parallaxe (18) en bandes (18S), divise encore chaque bande dans une direction de largeur de bande en une région de bandes d'oeil gauche (18SL) et une région de bandes d'oeil droit (18SR) présentant une largeur identique, la région de bandes d'oeil gauche et la région de bandes d'oeil droit étant définies comme un jeu de régions de bandes (18S), et agence les régions de bandes d'oeil gauche (18SL) et les régions de bandes d'oeil droit (18SR) de manière à ce qu'elles soient placées par alternance dans la direction de largeur de bande, et une fonction de division de région unitaire (40), laquelle divise le jeu de régions de bandes (18S) en des largeurs aléatoires dans une direction de bande afin de générer les jeux de régions unitaires (18U) présentant des tailles différentes dans la direction de bande ;
dans lequel la section de ré-agencement de région unitaire (42) ré-agence par alternance les jeux de régions unitaires (18U), chacun étant composé de la région unitaire d'oeil gauche (18UL) et de la région unitaire d'oeil droit (18UR) de sorte que la région unitaire d'oeil gauche (18UL) et la région unitaire d'oeil droit (18UR) sont agencées par alternance dans la direction de bande, et
dans lequel la section de réflexion d'image (46) génère l'image à parallaxe en réfléchissant l'image d'oeil gauche dans la région d'oeil gauche de la zone d'affichage d'image à parallaxe (18) et en réfléchissant l'image d'oeil droit dans la région d'oeil droit de la zone d'affichage d'image à parallaxe, l'affichage d'image à parallaxe comprenant en outre un filtre de polarisation (48), lequel est disposé devant l'unité d'affichage d'image à parallaxe (12) et peut être manoeuvré sur la base de l'image à parallaxe de sorte qu'un état de polarisation de la région d'oeil gauche et un état de polarisation de la région d'oeil droit soient différents l'un de l'autre.

2. Dispositif d'affichage d'image à parallaxe selon la revendication 1, **caractérisé en ce que** la section de division de zone d'affichage d'image à parallaxe (36) présente une fonction de division de bande (38), laquelle divise la zone d'affichage d'image à parallaxe (18) en bandes présentant la même largeur.

3. Dispositif d'affichage d'image à parallaxe selon la revendication 1,
**caractérisé en ce que**
dans lequel la section de division de zone d'affichage d'image à parallaxe (36) présente une fonction de division de bande (38), laquelle divise la zone d'affichage d'image à parallaxe (18) en bandes présentant des largeurs différentes.

4. Dispositif d'affichage d'image à parallaxe selon la revendication 2 ou 3,
dans lequel l'unité de génération d'image à parallaxe (24) inclut en outre une section de décalage de région unitaire (44), et
dans lequel la section de décalage de région unitaire (44) sélectionne une bande arbitraire dans la zone d'affichage d'image à parallaxe (18) ayant été soumise au ré-agencement, et décale de manière aléatoire dans la direction de largeur de bande les régions unitaires d'oeil gauche (18UL) et les régions unitaires d'oeil droit (18UR) constituant la bande sélectionnée (S), et toute la zone d'affichage est ainsi décalée sur la base du décalage des régions unitaires d'oeil gauche (18UL) et des régions unitaires d'oeil droit (18UR).

5. Dispositif d'affichage d'image à parallaxe selon l'une quelconque des revendications 2 à 4,
dans lequel la direction de bande est une direction horizontale d'un écran d'affichage.

6. Dispositif d'affichage d'image à parallaxe selon l'une quelconque des revendications 2 à 4,
dans lequel la direction de bande est une direction verticale d'un écran d'affichage.

7. Dispositif d'affichage d'image à parallaxe selon l'une quelconque des revendications 2 à 4,
dans lequel la direction de bande est une direction oblique d'un écran d'affichage.

8. Procédé de génération d'image à parallaxe destiné à générer une image à parallaxe en divisant spatialement une image d'oeil gauche et une image d'oeil droit utilisées pour afficher une vue stéréoscopique, et en réfléchissant respectivement l'image d'oeil gauche et l'image d'oeil droit dans une région d'oeil gauche et une région d'oeil droit d'une zone d'affichage d'image à parallaxe (18),
comprenant les étapes pour :
diviser la zone d'affichage d'image à parallaxe en bandes (18S) ;
diviser encore chaque bande (18S) dans une direction de largeur de bande en une région de bandes d'oeil gauche (18SL) et une région de bandes d'oeil droit (18SR), et
agencer les régions de bandes d'oeil gauche et les régions de bandes d'oeil droit de manière à ce qu'elles soient placées par alternance dans la direction de largeur de bande, la région de bandes d'oeil gauche et la région de bandes d'oeil droit étant définies comme un jeu de régions de bandes (18S) ;
diviser le jeu de régions de bandes (18S) en des largeurs aléatoires dans la direction de bande afin de générer des jeux de régions unitaires (18U) présentant des tailles différentes dans la direction de bande ;
ré-agencer par alternance les jeux de régions unitaires, chacun composé de la région unitaire d'oeil gauche (18UL) et de la région unitaire d'oeil droit (18UR) de sorte que la région unitaire d'oeil gauche (18UL) et la région unitaire d'oeil droit (18UR) sont agencées par alternance dans la direction de bande, et
générer l'image à parallaxe en réfléchissant l'image d'oeil gauche dans la région d'oeil gauche de la zone d'affichage d'image à parallaxe, et en réfléchissant l'image d'oeil droit dans la région d'oeil droit de la zone d'affichage d'image à parallaxe, et
disposer devant l'image à parallaxe un filtre de polarisation (48), présentant un état de polarisation pour la région d'oeil droit et un état de polarisation pour la région d'oeil gauche, lesquels sont différents l'un de l'autre.

9. Procédé selon la revendication 8,
dans lequel l'étape pour diviser la zone d'image à parallaxe en bandes donne des bandes présentant la même largeur.

10. Procédé selon la revendication 8,
dans lequel l'étape pour diviser la zone d'affichage d'image à parallaxe en bandes donne des bandes présentant des largeurs différentes.

11. Procédé de génération d'image à parallaxe selon la revendication 9 ou 10, comprenant en outre une étape pour :
sélectionner une bande arbitraire dans la zone d'affichage d'image à parallaxe ayant été soumise au ré-agencement, et décaler de manière aléatoire dans la direction de largeur de bande les régions unitaires d'oeil gauche (18UL) et les régions unitaires d'oeil droit (18UR) constituant la bande sélectionnée, et toute la zone d'affichage est ainsi décalée sur la base du décalage des régions unitaires d'oeil gauche (18UL) et des régions unitaires d'oeil droit (18UR).

12. Impression d'image à parallaxe, dans laquelle l'image à parallaxe générée par le procédé de génération d'image à parallaxe selon l'une quelconque des revendications 9 à 10 est imprimée.
